# EUROPEAN PATENT APPLICATION

(11) **EP 1 998 280 A1**
(43) Date of publication of application: **03.12.2008**
(21) Application number: 06729517.0
(22) Date of filing: 20.03.2006
(51) Int. Cl.: G06Q 30/00

(54) **MERCHANDISE SALES PROMOTION-BY-REBATE SYSTEM AND SALES PROMOTING SYSTEM**

(71) Applicant: Olympus Corporation, Tokyo 151-0072 (JP)
(72) Inventor: SHIBASAKI, Takao, Tokyo 192-8512 (JP); UCHIYAMA, Hiroshi, Tokyo 192-8512 (JP)
(74) Representative: von Hellfeld, Axel
(86) International application number: PCT/JP2006/305549
(87) International publication number: WO 2007/108088

(57) **Abstract**

A sales promotion system of merchandise utilizing an Internet site, **characterized by** comprising information providing means (12) for sending predetermined information to an information terminal device (2) of a user via the Internet site, and means for calculating a cumulative total of charges or point values converted from charges paid in a predetermined period in exchange for information provided by the information providing means (12), so that the cumulative total is used for deciding a rebate amount rebated to the user when the user purchases a specific item of merchandise.

## Description

### Technical Field

The present invention relates to a sales promotion system and a sales promotion method for merchandise.

### Background Art

In recent years, a rebate service has widely been used for sales promotion of merchandise. This rebate service is a service in which, when a merchandise purchaser (user) purchases merchandise, points or the like are added depending on a purchase amount thereof, and when the same purchaser purchases merchandise the next time, the points or the like accumulated up to that point can be converted to a monetary amount and appropriated to payment of a charge for the merchandise.

For example, with respect to a merchandise sales promotion system to which a rebate service as described above is applied, Jpn. Pat. Appln. Publication No. 2002-259792 shows a commodity registering method and its device. This publication describes that a point refund service or the like is carried out with respect to buying and selling of a commodity at a virtual store established on the Internet for the purpose of sales promotion.

In addition, Jpn. Pat. Appln. Publication No. 2002-352162 describes a method and system for selling utilizing points, in which the user is provided with points upon purchasing merchandise via a sponsor server.

The inventions disclosed in the above publications have an advantageous effect on the point that sales are promoted by refunding points. However, with respect to an item of merchandise as a target of the sales promotion, such item of merchandise is limited to one that the user plans to purchase from the beginning in many cases. That is, when the user purchases an item of merchandise which the user needs, the user purchases such item of merchandise since the user considers there is an advantage if the user purchases such item of merchandise at a store where the user can receive point refunding later, in a case such item of merchandise is in the same price range. Therefore, it is unlikely that the user purchases merchandise that the user considers unnecessary according to the above inventions.

As described above, in a conventional technique, a sales promotion effect has not been expected for merchandise that the user does not intend to purchase from the beginning.

### Disclosure of Invention

According to the present invention, to the user who is interested in information provided on the Internet at the beginning and utilizes an information providing service, a rebate is provided on the basis of a monetary amount paid by the user as a charge for using the information providing service when the user purchases a certain specific item of merchandise. In this manner, the longer the user uses the information providing service, the higher the user's willingness to purchase the certain specific item of merchandise becomes. As described above, an object of the present invention is to increase a sales promotion effect with respect to an item of merchandise which the user does not necessarily intend to purchase at the beginning. That is, in a case where the user desires an item of merchandise in a category in which the certain specific item of merchandise is included, since the certain specific item of merchandise is a target for the rebate described above, the certain specific item of merchandise is likely preferred by the user over a competitive item of merchandise which is not a target for the rebate. In addition, a degree of such preference increases as time passes. Needless to say, the present invention achieves a sales promotion effect similar to the above with respect to the user who intends to purchase from the beginning.

In the present invention, a term "merchandise" is not limited to goods, but also includes services.

In addition, in the present invention, a term "Internet site" includes an Internet site for portable phones (hereinafter referred to as the portable phone site). In addition, points are a right that is provided to the user depending on a monetary amount paid by the user, regardless of the name of the points.

An object of the present invention is to motivate the user to purchase a specific item of merchandise and increase the sales promotion effect of merchandise, in a manner that an information provider provides information to the user via an Internet site, or more preferably, a portable phone site, and pools a charge for information provision paid by the user, and in a case where the user purchases a certain specific item of merchandise, for example, a seller or a manufacturer of the specific item of merchandise provides a rebate to the user.

Here, the Internet site means a location on the Internet where, for example, image data or the like is registered. In addition, the portable phone site means a location on the Internet where, for example, image data or the like is registered so that the image data or the like can be transmitted to a portable phone, in a service in which the Internet is connected via a portable phone.

In addition, the rebate here means refunding a part of, or the whole purchase amount, by any method.

In order to achieve the above object, the present invention provides the following means.

More specifically, according to a first aspect of the present invention, there is provided a sales promotion system of merchandise utilizing an Internet site, characterized by comprising: information providing means for sending predetermined information to an information terminal device of a user via the Internet site; and means for calculating a cumulative total of charges or point values converted from charges paid in a predetermined period in exchange for information provided by the information providing means, so that the cumulative total is used for deciding a rebate amount rebated to the user when the user purchases a specific item of merchandise.

According to the first aspect of the present invention, as the user who does not plan to purchase a specific item of merchandise at first receives information provision, a paid amount is stored without the user noticing it, and the user becomes capable of receiving a rebate. This motivates the user to purchase the specific item of merchandise and increases the sales promotion effect of the specific item of merchandise. In addition, the sales promotion effect for the specific item of merchandise increases for the user who plans to purchase from the beginning, in a manner that a price of the specific item of merchandise is substantially lowered as the user utilizes a service profitable for the user, which is the information provision.

According to a second aspect of the present invention, there is provided a sales promotion system of merchandise utilizing an Internet site, characterized by comprising: user registration means for storing user registration information in a user registration information storage medium after receiving new registration information of a user; information providing means for providing information to the user via the Internet site only in a case where the user registration information is stored in the user registration information storage medium; payment information registration means for receiving payment information of the user including a paid amount as a charge for the information provision, and storing the payment information in a payment information storage medium; payment information adding means for adding, in a case of receiving the payment information a plurality of times, a paid amount in the payment information received a plurality of times to the paid amount in the payment information stored in the payment information storage medium; total paid amount registration means for storing a paid amount in the payment information in the payment information storage medium as a total paid amount when the payment information is received only once, and storing a total amount obtained by addition by the payment information adding means in the total paid amount storage medium as a total paid amount in a case the payment information is received only once; total paid amount readout means for reading out the total paid amount corresponding to the user from the total paid amount storage medium; and rebate amount calculating means for calculating a rebate amount to be rebated from a charge for purchase of a specific item of merchandise according to the total paid amount read out by the total paid amount readout means only in a case where the user purchases the specific item of merchandise.

According to the second aspect of the present invention, as the user who does not plan to purchase a specific item of merchandise at first receives information provision, a paid amount is stored without the user noticing it, and the user becomes capable of receiving a rebate. This motivates the user to purchase the specific item of merchandise and increases the sales promotion effect for the specific item of merchandise. In addition, the sales promotion effect of the specific item of merchandise increases for the user who plans to purchase from the beginning, in a manner that a price of the specific item of merchandise is substantially lowered as the user utilizes a service profitable for the user, which is the information provision.

According to a third aspect of the present invention, the sales promotion system as defined in the second aspect of the present invention, is characterized in that the rebate amount is equal to the total paid amount.

According to the third aspect of the present invention, the total amount of a charge for the information provision paid by the user is rebated. For this reason, the user seemingly receives the information provision free of charge, and the sales promotion effect for the specific item of merchandise is increased.

According to a fourth aspect of the present invention, the sales promotion system as defined in the second aspect of the present invention, is characterized in that the rebate amount is an amount that is calculated by multiplying points which are converted from the paid amount by a certain amount.

According to the fourth aspect of the present invention, the charge for the information provision paid by the user is converted to points, and an amount calculated by the points multiplied by a certain amount is rebated. This achieves an even higher sales promotion effect for the user who has used the site for a long period of time.

According to a fifth aspect of the present invention, the sales promotion system as defined in the second aspect of the present invention, is characterized in that the rebate amount is an amount that is calculated in a manner that the total paid amount is converted to points, and the points are multiplied by a conversion rate from the points to the rebate amount that is changed depending on a utilization period of the Internet site of the user.

According to the fifth aspect of the present invention, a charge for the information provision paid by the user is converted to points, and an amount calculated by the points multiplied by a conversion rate corresponding to a utilization period of the user is rebated. For this reason, an even higher sales promotion effect is achieved for the user who has used the site for a long period of time.

According to a sixth aspect of the present invention, the sales promotion system as defined in the first aspect of the present invention, is characterized in that the rebate amount is an amount that is calculated in a manner that points are multiplied by a conversion rate from the points to the rebate amount that is changed depending on a utilization period of the Internet site of the user.

According to the sixth aspect of the present invention, a charge for the information provision paid by the user is converted to points, and an amount calculated by the points multiplied by a conversion rate corresponding to a utilization period of the user is rebated. This achieves an even higher sales promotion effect for the user who has used the site for a long period of time.

According to a seventh aspect of the present invention, the sales promotion system as defined in the second aspect of the present invention, is characterized in that a charge for the information provision is a monthly utilization charge for the Internet site.

According to the seventh aspect of the present invention, the user receives a rebate corresponding to a total paid amount of a monthly utilization charge of the Internet site. For this reason, an even higher sales promotion effect is achieved for the user who has used the site for a long period of time.

According to an eighth aspect of the present invention, the sales promotion system as defined in the first or the second aspect of the present invention, is characterized in that the Internet site is a portable phone site.

According to the eighth aspect of the present invention, the user can receive the information provision via a portable phone regardless of where the user is, and receive a rebate corresponding to a utilization charge for the portable phone site. Therefore, an even higher sales promotion effect is achieved for the user who has used the portable phone site for a long period of time.

According to a ninth aspect of the present invention, the sales promotion system as defined in the first or the second aspect of the present invention, is characterized in that a certain relationship exists between a content of the information and the specific item of merchandise.

According to the ninth aspect of the present invention, the user who receives the information provision becomes interested in a specific item of merchandise by a certain relationship established between a content of the information provision and the specific item of merchandise. For this reason, an advantageous effect that a sales promotion effect of the specific item of merchandise is increased is achieved, by a synergy effect with an effect of the rebate described above.

According to a tenth aspect of the present invention, the sales promotion system as defined in the ninth aspect of the present invention, is characterized in that the content of the information is travel information including a photo, and the specific item of merchandise is a camera.

According to the tenth aspect of the present invention, the user who is interested in traveling is attracted, and also the user can receive a rebate corresponding to a charge for the information provision in a case the user purchases a camera. This achieves an advantageous effect that the rebate motivates the user to purchase the camera that is used for taking photos during a trip, and leads to sales promotion of cameras.

According to an eleventh aspect of the present invention, there is provided A sales promotion system of merchandise utilizing an Internet site, characterized by comprising: rebate application information registration means for storing rebate application information of a user in a rebate application information storage medium; payment information requesting means for requesting the Internet site to send payment information of the user including a total paid amount which is a total amount of charges in a predetermined period for information provided to the user via the Internet, in a case where at least the rebate application information is stored in the rebate application information storage medium; payment information receiving means for receiving the payment information sent from the Internet site in accordance with the request; and rebate amount calculating means for calculating a rebate amount to be discounted from a charge for purchase of a specific item of merchandise in accordance with the total paid amount of the user included in the payment information, only in a case that the user purchases the specific item of merchandise.

According to the eleventh aspect of the present invention, as the user who does not plan to purchase a specific item of merchandise at first receives the information provision, a paid amount is stored without the user noticing it, and the user becomes capable of receiving a rebate. This motivates the user to purchase the specific item of merchandise and increases the sales promotion effect for the specific item of merchandise. In addition, the sales promotion effect for the specific item of merchandise increases for the user who plans to purchase from the beginning, in a manner that a price of the specific item of merchandise is substantially lowered as the user utilizes a service profitable for the user, which is the information provision.

According to a twelfth aspect of the present invention, the sales promotion system as defined in the eleventh aspect of the present invention, is characterized in that the rebate amount is equal to the total paid amount.

According to the twelfth aspect of the present invention, the total amount of a charge for the information provision paid by the user is rebated. Therefore, the user seemingly receives the information provision free of charge, and the sales promotion effect of the specific item of merchandise is increased.

According to a thirteenth aspect of the present invention, the sales promotion system as defined in the eleventh aspect of the present invention, is characterized in that the rebate amount is an amount that is calculated by multiplying points which is converted from the paid amount by a certain amount.

According to the thirteenth aspect of the present invention, the charge for the information provision paid by the user is converted to points, and an amount calculated by the points multiplied by a certain amount is rebated. In this manner, an even higher sales promotion effect is achieved for the user who has used the site for a long period of time.

According to a fourteenth aspect of the present invention, the sales promotion system as defined in the eleventh aspect of the present invention, is characterized in that the rebate amount is an amount that is calculated in a manner that the total paid amount is converted to points, and the points are multiplied by a conversion rate from the points to the rebate amount that is changed depending on a utilization period of the Internet site of the user.

According to the fourteenth aspect of the present invention, a charge for the information provision paid by the user is converted to points, and an amount calculated by the points multiplied by a conversion rate corresponding to a utilization period of the user is rebated. In this manner, an even higher sales promotion effect is achieved for the user who has used the site for a long period of time.

According to a fifteenth aspect of the present invention is characterized in that a charge for the information provided to the user is a monthly utilization charge for the Internet site.

According to the fifteenth aspect of the present invention, the user receives a rebate corresponding to a total paid amount of a monthly utilization charge of the Internet site. For this reason, an even higher sales promotion effect is achieved for the user who has used the site for a long period of time.

According to a sixteenth aspect of the present invention, the sales promotion system as defined in the eleventh aspect of the present invention, is characterized in that the Internet site is a portable phone site.

According to the sixteenth aspect of the present invention, the user can receive the information provision via a portable phone regardless of where the user is, and receives a rebate corresponding to the usage charge of the portable phone site. In this manner, an even higher sales promotion effect is achieved for the user who has used the portable phone site for a long period of time.

According to a seventeenth aspect of the present invention, the sales promotion system as defined in the eleventh aspect of the present invention, is characterized in that a certain relationship exists between a content of the information provided to the user and the specific item of merchandise.

According to the seventeenth aspect of the present invention, the user who receives the information provision becomes interested in a specific item of merchandise by establishing a certain relationship between a content of the information provision and the specific item of merchandise. For this reason, an advantageous effect that a sales promotion effect of the specific item of merchandise is increased is achieved by a synergy effect with an effect of the rebate described above.

According to an eighteenth aspect of the present invention, the sales promotion system as defined in the seventeenth aspect of the present invention, is characterized in that the content of the information provided to the user is travel information including a photo, and the specific item of merchandise is a camera.

According to the eighteenth aspect of the present invention, the user who is interested in traveling is attracted, and also the user can receive a rebate corresponding to a charge for the information provision in a case the user purchases a camera. This achieves an advantageous effect that the rebate motivates the user to purchase the camera for taking photos during a trip, and leads to sales promotion of cameras.

According to a nineteenth aspect of the present invention, there is provided a sales promotion method of merchandise utilizing an Internet site, characterized by comprising: a step of causing a computer to provide predetermined information to an information terminal device of a user via the Internet site; and a step of causing the computer to calculate a cumulative amount of charges or point values converted from charges paid in exchange for the provided predetermined information, so that the cumulative amount is used for deciding a rebate amount rebated to the user when the user purchases a specific item of merchandise.

According to the nineteenth aspect of the present invention, as the user who does not plan to purchase a specific item of merchandise at first receives information provision, a paid amount is stored without the user noticing it, and the user becomes capable of receiving a rebate. This motivates the user to purchase the specific item of merchandise and increases the sales promotion effect of the specific item of merchandise. In addition, the sales promotion effect for the specific item of merchandise increases for the user who plans to purchase from the beginning, in a manner that a price of the specific item of merchandise is substantially lowered as the user utilizes a service profitable for the user, which is the information provision.

According to a twentieth aspect of the present invention, there is provided a sales promotion method of merchandise utilizing an Internet site, characterized by comprising: a step of storing user registration information in a user registration information storage medium after receiving new registration information of a user; a step of providing information to the user via the Internet site only in a case where the user registration information is stored in the user registration information storage medium; a step of receiving payment information of the user including a paid amount as a charge for the information provision, and storing the payment information in a payment information storage medium; a step of adding, in a case of receiving the payment information a plurality of times, a paid amount in the payment information received a plurality of times to the paid amount in the payment information stored in the payment information storage medium; a step of storing a paid amount in the payment information in the payment information storage medium as a total paid amount when the payment information is received only once, and storing a total amount obtained by addition by the step of adding a paid amount total paid amount storage medium as a total paid amount in a case the payment information is received only once; a step of reading out the total paid amount corresponding to the user from the total paid amount storage medium; and a step of calculating a rebate amount to be rebated from a charge for purchase of a specific item of merchandise according to the total paid amount read out from the total paid amount storage medium only in a case where the user purchases the specific item of merchandise.

According to the twentieth aspect of the present invention, as the user who does not plan to purchase a specific item of merchandise at first receives information provision, a paid amount is stored without the user noticing it, and the user becomes capable of receiving a rebate. This motivates the user to purchase the specific item of merchandise and increases the sales promotion effect of the specific item of merchandise. In addition, the sales promotion effect of the specific item of merchandise increases for the user who plans to purchase from the beginning, in a manner that a price of the specific item of merchandise is substantially lowered as the user utilizes a service profitable for the user, which is the information provision.

According to a twenty-first aspect of the present invention, the sales promotion method as defined in the twentieth aspect of the present invention, is characterized in that the rebate amount is equal to the total paid amount.

According to the twenty-first aspect of the present invention, the total amount of a charge for the information provision paid by the user is rebated. Therefore, the user seemingly receives the information provision free of charge, and the sales promotion effect for the specific item of merchandise is increased.

According to a twenty-second aspect of the present invention, the sales promotion method as defined in the twentieth aspect of the present invention, is characterized in that the rebate amount is an amount that is calculated by multiplying points which are converted from the total paid amount by a certain amount.

According to the twenty-second aspect of the present invention, the charge for the information provision paid by the user is converted to points, and an amount calculated by the points multiplied by a certain amount is rebated. Therefore, an even higher sales promotion effect is achieved for the user who has used the site for a long period of time.

According to a twenty-third aspect of the present invention, the sales promotion as defined in the twentieth aspect of the present invention, is characterized in that the rebate amount is an amount that is calculated in a manner that the total paid amount is converted to points, and the points are multiplied by a conversion rate from the points to the rebate amount that is changed depending on a utilization period of the Internet site of the user.

According to the twenty-third aspect of the present invention, a charge for the information provision paid by the user is converted to points, and an amount calculated by the points multiplied by a conversion rate corresponding to a utilization period of the user is rebated. Therefore, an even higher sales promotion effect is achieved for the user who has used the site for a long period of time.

According to a twenty-fourth aspect of the present invention, the sales promotion method as defined in the nineteenth aspect of the present invention, is characterized in that the rebate amount is an amount that is calculated in a manner that points are multiplied by a conversion rate from the points to the rebate amount that is changed depending on a utilization period of the Internet site of the user.

According to the twenty-fourth aspect of the present invention, a charge for the information provision paid by the user is converted to points, and an amount calculated by the points multiplied by a conversion rate corresponding to a utilization period of the user is rebated. Therefore, an even higher sales promotion effect is achieved for the user who has used the site for a long period of time.

According to a twenty-fifth aspect of the present invention, the sales promotion method as defined in the twentieth aspect of the present invention, is characterized in that a charge for the information provision is a monthly utilization charge for the Internet site.

According to the twenty-fifth aspect of the present invention, the user receives a rebate corresponding to a total paid amount of a monthly usage charge of the Internet site. Therefore, an even higher sales promotion effect is achieved for the user who has used the site for a long period of time.

According to a twenty-sixth aspect of the present invention, the sales promotion method as defined in the nineteenth or the twentieth aspect of the present invention, is characterized in that the Internet site is a portable phone site.

According to the twenty-sixth aspect of the present invention, the user can receive the information provision via a portable phone regardless of where the user is, and receives a rebate corresponding to the usage charge of the portable phone site. Therefore, an even higher sales promotion effect is achieved for the user who has used the portable phone site for a long period of time.

According to a twenty-seventh aspect of the present invention, the sales promotion method as defined in the nineteenth or the twentieth aspect of the present invention, is characterized in that a certain relationship exists between a content of the information and the specific item of merchandise.

According to the twenty-seventh aspect of the present invention, the user who receives the information provision becomes interested in a specific item of merchandise by establishing a certain relationship between a content of the information provision and the specific item of merchandise. Therefore, an advantageous effect that a sales promotion effect of the specific item of merchandise is increased is achieved by a synergy effect with an effect of the rebate described above.

According to a twenty-eighth aspect of the present invention, the sales promotion method as defined in the twenty-seventh aspect of the present invention, is characterized in that the content of the information is travel information including a photo, and the specific item of merchandise is a camera.

According to the twenty-eighth aspect of the present invention, the user who is interested in traveling is attracted, and also the user can receive a rebate corresponding to a charge for the information provision in a case the user purchases a camera. This achieves an advantageous effect that the rebate motivates the user to purchase the camera for taking photos during a trip, and leads to sales promotion of cameras.

According to a twenty-ninth aspect of the present invention, there is provided a sales promotion method of merchandise utilizing an Internet site, characterized by comprising: a step of storing rebate application information of a user in a rebate application information storage medium; a step of requesting the Internet site to send payment information of the user including a total paid amount which is a total amount of charges in a predetermined period for information provided to the user via the Internet, in a case where at least the rebate application information is stored in the rebate application information storage medium; a step of receiving the payment information sent from the Internet site in accordance with the request; and a step of calculating a rebate amount to be discounted from a charge for purchase of a specific item of merchandise in accordance with the total paid amount of the user included in the payment information, only in a case that the user purchases the specific item of merchandise.

According to the twenty-ninth aspect of the present invention, as the user who does not plan to purchase a specific item of merchandise at first receives information provision, a paid amount is stored without the user noticing it, and the user becomes capable of receiving a rebate. This motivates the user to purchase the specific item of merchandise and increases the sales promotion effect of the specific item of merchandise. In addition, the sales promotion effect for the specific item of merchandise increases for the user who plans to purchase from the beginning, in a manner that a price of the specific item of merchandise is substantially lowered as the user utilizes a service profitable for the user, which is the information provision.

According to a thirtieth aspect of the present invention, the sales promotion method as defined in the twenty-ninth aspect of the present invention, is characterized in that the rebate amount is equal to the total paid amount.

According to the thirtieth aspect of the present invention, the total amount of a charge for the information provision paid by the user is rebated. Therefore, the user seemingly receives the information provision free of charge, and the sales promotion effect of the specific item of merchandise is increased.

According to a thirty-first aspect of the present invention, the sales promotion method as defined in the twenty-ninth aspect of the present invention, is characterized in that the rebate amount is an amount that is calculated by multiplying points which are converted from the total paid amount by a certain amount.

According to the thirty-first aspect of the present invention, the charge for the information provision paid by the user is converted to points, and an amount calculated by the points multiplied by a certain amount is rebated. Therefore, an even higher sales promotion effect is achieved for the user who has used the site for a long period of time.

According to a thirty-second aspect of the present invention, the sales promotion method as defined in the twenty-ninth aspect of the present invention, is characterized in that the rebate amount is an amount that is calculated in a manner that the total paid amount is converted to points, and the points are multiplied by a conversion rate from the points to the rebate amount that is changed depending on a utilization period of the Internet site of the user.

According to the thirty-second aspect of the present invention, a charge for the information provision paid by the user is converted to points, and an amount calculated by the points multiplied by a conversion rate corresponding to a utilization period of the user is rebated. Therefore, an even higher sales promotion effect is achieved for the user who has used the site for a long period of time.

According to a thirty-third aspect of the present invention, the sales promotion method as defined in the twenty-ninth aspect of the present invention, is characterized in that a charge for the information provided to the user is a monthly utilization charge for the Internet site.

According to the thirty-third aspect of the present invention, the user receives a rebate corresponding to a total paid amount of a monthly utilization charge of the Internet site. Therefore, an even higher sales promotion effect is achieved for the user who has used the site for a long period of time.

According to a thirty-fourth aspect of the present invention, the sales promotion method as defined in the twenty-ninth aspect of the present invention, is characterized in that the Internet site is a portable phone site.

According to the thirty-fourth aspect of the present invention, the user can receive the information provision via a portable phone regardless of where the user is, and receive a rebate corresponding to the usage charge of the portable phone site. Therefore, an even higher sales promotion effect is achieved for the user who has used the portable phone site for a long period of time.

According to a thirty-fifth aspect of the present invention, the sales promotion method as defined in the twenty-ninth aspect of the present invention, is characterized in that a certain relationship exists between a content of the information provided to the user and the specific item of merchandise.

According to the thirty-fifth aspect of the present invention, the user who receives the information provision becomes interested in a specific item of merchandise by establishing a certain relationship between a content of the information provision and the specific item of merchandise. Therefore, an advantageous effect that a sales promotion effect of the specific item of merchandise is increased is achieved by a synergy effect with an effect of the rebate described above.

According to a thirty-sixth aspect of the present invention, the sales promotion method as defined in the thirty-fifth aspect of the present invention, is characterized in that the content of the information provided to the user is travel information including a photo, and the specific item of merchandise is a camera.

According to the thirty-sixth aspect of the present invention, the user who is interested in traveling is attracted, and also the user can receive a rebate corresponding to a charge for the information provision in a case that the user purchases a camera. This achieves an advantageous effect that the rebate motivates the user to purchase the camera for taking photos during a trip, and leads to sales promotion of cameras.

### Brief Description of Drawings

FIG. 1 is a view that explains relationships between the user, an information provider side server, and a manufacturer side server.
FIG. 2 is a view showing a transition of a display screen of a portable phone when the user is receiving information provision.
FIG. 3 is a view that explains relationships between three parties; the user, an information provider, and a manufacturer.
FIG. 4 is a view that explains a substantial amount that is required for the user to purchase merchandise.
FIG. 5 is a view that explains a method of calculating a rebate amount using points.
FIG. 6 is a view that explains flows between the three parties; the user, the information provider, and the manufacturer.
FIG. 7 is a view that explains flows between the three parties; the user, the information provider, and the manufacturer.

### Best Mode for Carrying Out the Invention

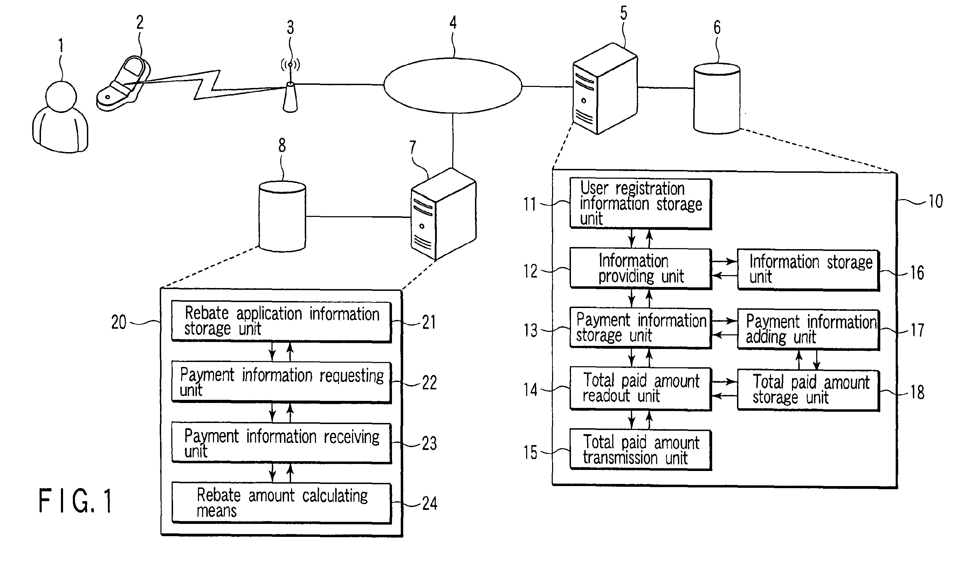

First, an outline of an embodiment of the present invention will be described with reference to FIG. 1.

A portable phone 2 used by a user 1 is connected to an access point 3 by a wireless line. The access point 3 is connected to an internetwork 4 via a line. Further, the internetwork 4 is connected to an information provider side server 5 that provides an Internet site via a line. The information provider side server 5 is connected to an information provider side storage medium 6. The information provider side storage medium 6 may be configured with an external storage device, such as a CD-ROM or a DVD, or may be configured as an internal storage device such as a memory. A functional structure 10 of the information provider side server 5 and the information provider side storage medium 6 includes a user registration information storage unit 11, an information providing unit 12, a payment information storage unit 13, a total paid amount readout unit 14, a total paid amount transmission unit 15, an information storage unit 16, a payment information adding unit 17 and a total paid amount storage unit 18, that will be described hereinafter. Likewise, the network 4 is also connected to a manufacturer side server 7 via a line. The manufacturer side server 7 is connected to a server side storage medium 8. The manufacturer side storage medium 8 may be configured with an external storage device, such as a CD-ROM or a DVD, or may be configured as an internal storage device such as a memory. A functional structure 20 of the manufacturer side server 7 and the manufacturer side storage medium 8 includes a rebate application information storage unit 21, a payment information requesting unit 22, a payment information receiving unit 23, and a rebate amount calculating means 24.

The user 1 who desires provision of information, such as travel information, operates the portable phone 2 as an information terminal, and accesses an Internet site, or a portable phone site in this case, for the purpose of user registration. At this time, after a signal transmitted from the portable phone 2 reaches the access point 3, the signal reaches the network 4 through a line, and further the information provider side server 5 through a line. The information provider side server 5 stores the new registration information from the user 1 in the user registration information storage unit 11. As the registration information, there are a user's name, address, telephone number, e-mail address, and payment information (credit card number, or the like). In this manner, the user 1 can receive information provision. In a case that the user 1 desires the information provision, the user 1 accesses the portable phone site again. The signal reaches the information provider side server 5 after passing a similar path as described above, and the information providing unit 12 receives the signal. The information providing unit 12 reads out information desired by the user from the information storage unit 16, and the information is displayed on a display screen of the portable phone 2 via a path reverse to the previous one. The user 1 views the display screen of the portable phone 2, and an object is achieved.

In a case that the user 1 pays a charge for the information provision after receiving the information provision for a certain period of time, or in a case that a credit card company pays the charge according to a contract, payment information is transmitted from a bank, the credit card company, or the like to the information provider side server 5. Then, the payment information is stored in the payment information storage unit 13. The payment information is transmitted to the payment information adding unit 17. However, if the payment information is used for the first time, the information to which the payment information is added does not exist. Therefore, the payment information is transmitted to the total paid amount storage unit 18 as it is and stored. In a case the user 1 pays a charge for the information provision again after a certain period of time further passes, or a credit card company pays the charge according to a contract, the payment information is stored in the payment information storage unit 13. Thereafter, the information is transmitted to the payment information adding unit 17. The payment information adding unit 17 reads out a total paid amount from the total paid amount storage unit 18, adds a paid amount in the paid information newly transmitted and the total paid amount and calculates a new total paid amount, and then transmits a result to the total paid amount storage unit 18. Then, the total paid amount storage unit 18 stores the calculation result.

In a case that the user 1 purchases a specific item of merchandise, the user applies for a rebate to a manufacturer or the like in order to receive the rebate. This application may be made by mail or may be made by connecting a line to the manufacturer side server 7 through the access point 3 and the network 4 by using the portable phone 2. The manufacturer side server 7 which receives the application makes the rebate application information stored in the rebate application information storage unit 21 in the manufacturer side storage medium 8. In a case that the rebate application information is stored in the rebate application information storage unit 21, the payment information requesting unit 22 requests the information provider side server 5 to send the payment information of the user including a total paid amount which is a total amount of a charge for information provided to the user 1. After receiving the request, the total paid amount transmission unit 15 sends the total paid amount to the manufacturer side server 7. The payment information receiving unit 23 receives the total paid amount. The payment information receiving unit 23 transmits the received total paid amount to the rebate amount calculating means 24. Then, the rebate amount calculating means 24 calculates a rebate amount corresponding to the total paid amount. The rebate amount calculated in this way is refunded to the user 1 by using a method of mailing, cash transfer, or the like.

Needless to say, the user may ask in advance a manufacturer or a site administrator to issue a coupon on which a rebate amount is specified, and appropriate the coupon to part or whole payment of an amount at the time of purchasing the specific item of merchandise.

In addition, as a modification of the above, the rebate amount may be decided according to the total paid amount on an information provider side, instead of the manufacturer side. In this case, the manufacturer or the like receives the rebate amount, in place of the total paid amount, from the information provider.

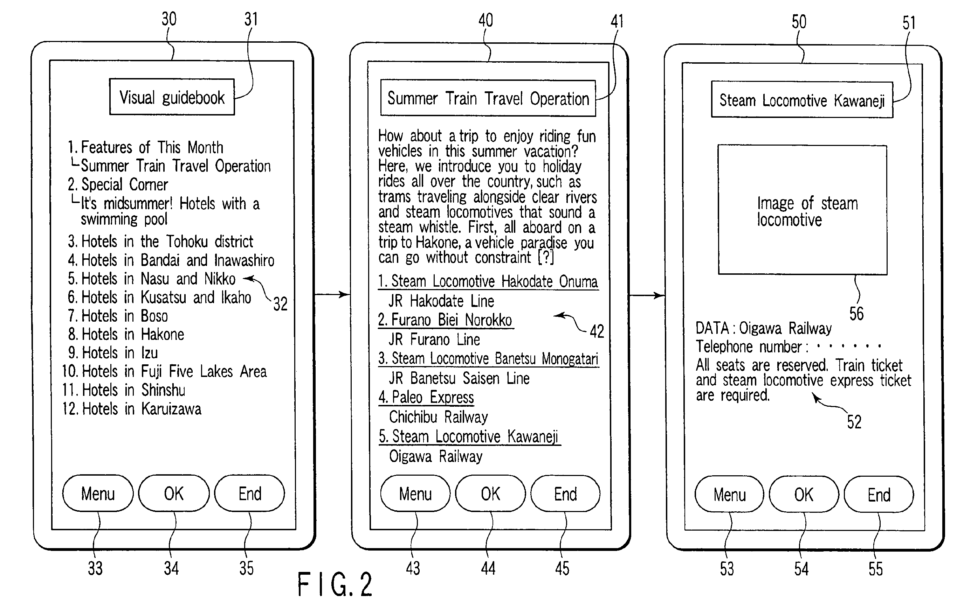

Next, a method in which the user actually receives the information provision by using the portable phone will be described with reference to FIG. 2. In FIG. 2, numerals 30, 40, 50 refer to display screens of the portable phone. On the display screens, titles 31, 41, and 51 of the information are shown on a top part, and sentences 32, 42, and 52, or an image 56, or the like showing a content of the information are displayed on a center part of the screens. In addition, menu buttons 33, 43, and 53, OK buttons 34, 44, 54, and end buttons 35, 45, and 55, which are necessary for carrying out a variety of types of operation, are displayed on a lower part of the screens.

The user accesses the portable phone site after the user completes the user registration. Then, a screen such as the portable display screen 30 is displayed on the portable phone. Here, travel information of a variety of genres is provided as shown by the numerical number 32 in FIG. 2, under a display of a visual guidebook 31. In this screen, when "Summer Train Travel Operation" under "1. Features of This Month" is selected, and the OK button 34 in the center of the lower part of the screen is pressed, the screen is switched, and a screen such as the portable display screen 40 is displayed. Next, the portable display screen 40 will be described. On the top part of the screen, the item that is selected previously is displayed as shown by the numerical number 41 in FIG. 2. Since items of greater are displayed as shown by the numerical number 42 in FIG. 2, the user selects an item that the user desires from the items. Here, when "5. Steam Locomotive KAWANEJI" is selected and the OK button 44 is pressed, the screen is switched, and a screen such as the portable display screen 50 is displayed. On this screen, as described above, the item selected previously is displayed on the top part of the screen as shown by the numerical number 51 in FIG. 2, and a photo image 56 of an actual steam locomotive is displayed on the center of the screen together with a description 52 thereof.

As described above, the user can obtain an image that appeals to the traveler's sentiment by using the portable phone whenever and wherever the user likes, for example, at the user's home, during a trip, or the like.

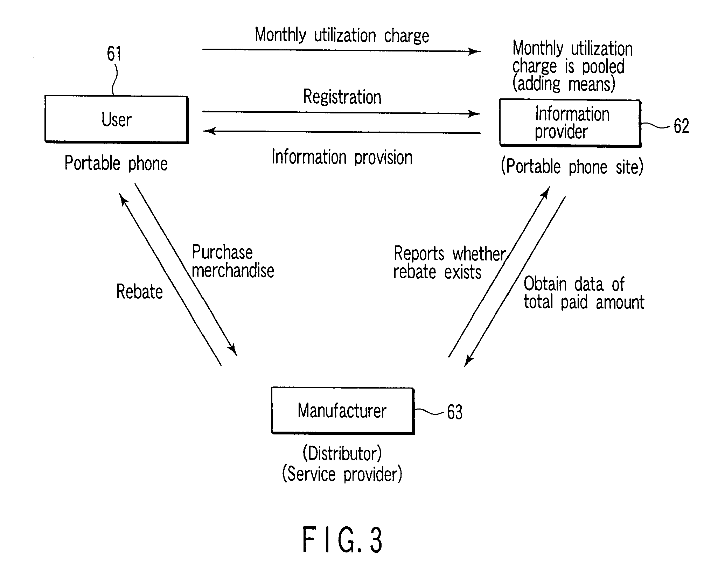

Hereinafter, relationships between the user, the information provider, and the manufacturer will be described with reference to FIG. 3. In the description hereinafter, the information provider is assumed to use the portable phone site as a means for providing information. However, such means is not limited to this as a matter of course, and such means may be any site as long as the means is an Internet site. First, a user 61 uses the portable phone, accesses the portable phone site that is established by the information provider, and carries out user registration. In addition, the user 61 receives information provision as needed from an information provider 62 through the portable phone site. The user who has completed the user registration pays a monthly utilization charge as payment for utilizing the portable phone site to the information provider 62 at the end of the month. The user 61 keeps paying the monthly utilization charge for every month during a period that the user 61 utilizes the portable phone site. On the other hand, the information provider 62 pools the monthly utilization charge of every month of the user.

As the period in which the user 61 utilizes the portable phone site becomes long, the total paid amount pooled by the information provider 62 becomes larger, and therefore, the rebate amount also becomes larger. For this reason, a price of a certain specific item of merchandise sold by a manufacturer 63 is substantially lowered, and this increases a willingness to purchase the specific item of merchandise.

In view of the above, the user 61 purchases merchandise from the manufacturer 63 after the total paid amount becomes a certain amount. The merchandise is not limited to goods, but may be some kind of service. In addition, the manufacturer 63 may be a distributor or a service provider. Here, the manufacturer 63 is assumed to sell a camera as the certain specific item of merchandise. As described above, the user 61 purchases a camera from the manufacturer 63, and also applies for a rebate to the manufacturer 63. The manufacturer 63 which has received the application for a rebate requests the information provider 62 of data of the total paid amount of charges for the information provision of the user 61, and receives such data. The manufacturer 63 calculates the rebate amount corresponding to the total paid amount included in the data, and provides a rebate of the calculated amount to the user 61.

After providing the rebate, the manufacturer 63 reports to the information provider 62 that the rebate is provided. In this manner, the information provider 62 subtracts the total paid amount which has already become the target of the rebate from the total amount of the user 61.

To summarize the relationships between the three parties, relationships of information provision and payment of charges are established between the user 61 and the information provider 62. That is, the user 61 receives provision of information that is profitable for the user himself or herself, and pays a charge therefor to the information provider 62 at the same time.

In addition, relationships of purchase of merchandise and payment of charges are established between the user 61 and the manufacturer 63. That is, the user 61 purchases merchandise from the manufacturer 63, and at the same time, the user 61 receives a rebate of part of a purchase price of the merchandise. As a result, the user 61 purchases the merchandise at a cheaper price. This advantage generates a motivation of the user 61 to purchase a specific item of merchandise from the manufacturer 63.

On the other hand, there is a relationship of exchanging data of the total paid amount and data of existence of a rebate between the information provider 62 and the manufacturer 63.

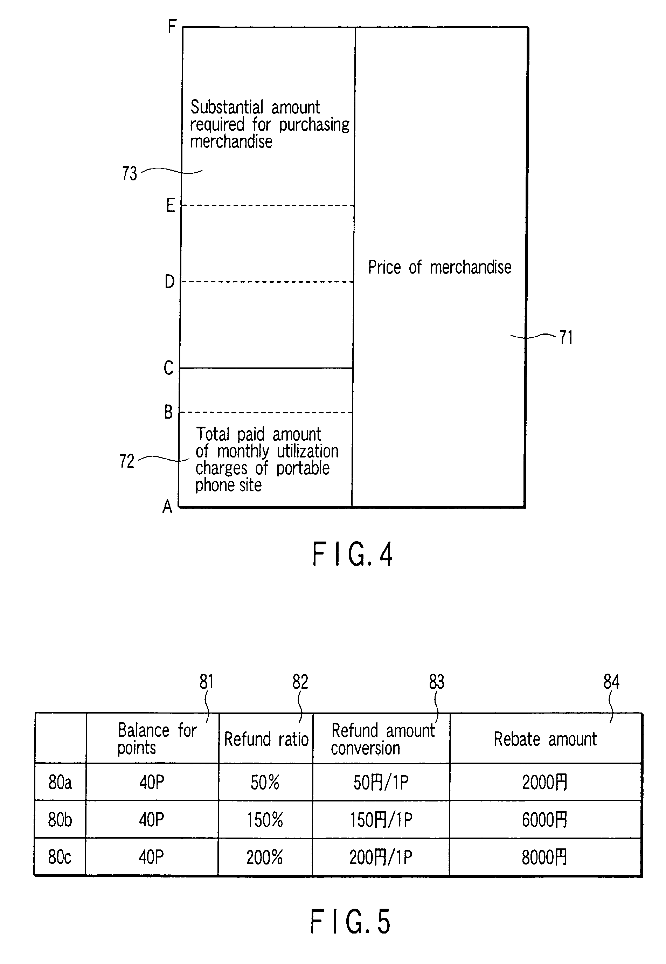

FIG. 4 explains how an incentive to purchase a specific item of merchandise is provided to the user. The user independently accesses the portable phone site in order to obtain information, such as travel information, without necessarily intending to purchase a specific item of merchandise at the beginning, and pays a utilization charge thereof. The utilization charge is pooled by the information provider as described above, and is rebated corresponding to the total paid amount when the user purchases a specific item of merchandise. This relationship will be described in detail. As shown in FIG. 4, a right side shows a price 71 of merchandise, and a lower part on a left side shows a total paid amount 72 of a monthly utilization charge paid to the information provider for utilization of the portable phone site by the user. Here, description will be made by assuming that the total paid amount is equal to the paid amount. In FIG. 4, a broken line B shows the total paid amount after the user utilizes the portable phone site for a certain period. That is, at this point, the total paid amount 72 for the monthly utilization charge of the portable phone site is a region sandwiched by the broken line B and a solid line A. On the other hand, a substantial amount 73 required for purchasing the merchandise at this point is a region sandwiched by a solid line F and the broken line B. This will be described more in detail as below. The user pays the price 71 for a product at the time of purchasing the merchandise. However, the total paid amount 72 of the monthly utilization charge for the portable phone site is rebated. Therefore, an amount finally paid by the user in order to purchase the merchandise is shown by a numeral 73. For this reason, in the description hereinafter, the substantial amount 73 required for purchasing the product will be used for the description. At this point, since an amount to be paid by the user does not differ much from the price of the merchandise, the user does not really consider purchasing such item of merchandise. However, in a case that the user utilizes the portable phone site for a longer period, the total paid amount reaches a solid line C. Then, for the user whose purpose has been to receive information provision, a substantial amount required for purchasing the merchandise is shown by a region between a solid line F and the solid line C in FIG. 4, and becomes much cheaper. For this reason, the motivation to purchase the specific item of the merchandise is generated in the user. As a result, from a viewpoint of the manufacturer, a sales promotion effect for a specific item of merchandise is increased. Even in a case where the user does not purchase at the point of C, when the total paid amount reaches a broken line D or E in FIG. 4 by the user utilizing the portable phone site for an even longer period, the substantial amount 73 required for purchasing the merchandise becomes half or below of the original price 71 of the merchandise. Therefore, a feeling of purchasing at a cheaper price is increased for the user, and as a result, the sales promotion effect is increased.

Here, in a case where a certain relationship is established between the provided information and a specific item of merchandise, an even higher sales promotion effect can be expected. For example, in a case where travel information including a landscape image is provided to the user as the information provision, there is a high possibility that the user registered in the portable phone site has an interest in traveling. In a case that the user who is interested in traveling views a landscape image or the like via the portable phone site, the user becomes experiences an urge to travel, which raises the possibility of such user traveling. In addition, understandably, if the user views a number of images and so on relating to travel via the portable phone site on a regular basis, this drives the user to desire to record landscape images in his or her trip in some way. By setting a camera with which photos can be taken in a trip as a specific item of merchandise that is subject to a rebate with respect to the user in the above state, an extremely high sales promotion effect can be achieved in a synergy effect with the information provision.

Next, description will be made with respect to a calculation method of a rebate amount. In order to calculate the rebate amount, a variety of methods can be considered. As an example, a method of rebating a total amount of the total paid amount paid as charges for the information provision by the user as described above can be considered. That is, it is assumed that the monthly utilization charge of the portable phone site is 200 yen and a utilization period is 20 months. Then, the total paid amount of the user is 4000 yen. This 4000 yen becomes the rebate amount, and in a case that the user purchases a specific item of merchandise, 4000 yen is discounted from the price of the specific item of merchandise.

In this manner, for the user, the total amount of an amount paid as charges for the information provision is appropriated to a charge for purchase of the specific item of merchandise. Therefore, the user can seemingly receive the information provision free of charge as a result, and this leads to sales promotion of the specific item of merchandise.

As another method, a method in which the total paid amount is converted to points, and such points are converted to a refund amount by using a certain refund rate, and the rebate amount is calculated can be considered. Similarly to the example described previously, it is assumed that the monthly utilization charge for the portable phone site is 200 yen and the utilization period is 20 months. Then, the total paid amount of the user becomes 4000 yen. Here, if one point is assumed to be 100 yen and the total paid amount is converted further to points, 40P (points) is obtained. This point exchange rate can be changed optionally. Next, a refund rate is determined. As the refund rate becomes larger, the rebate amount becomes larger with respect to the same total paid amount. This will be described with reference to FIG. 5.

A row of 80a in FIG. 5 has a refund rate 82 of 50%. Here, as described above, a point balance 81 is assumed to be 40P. In a case the refund rate is 50%, 1P is converted to 50 yen in a refund amount conversion 83. Then, 40P x 50 yen / 1P = 2000 yen is obtained, and a rebate amount 84 is determined to be 2000 yen. Hereinafter, in a similar manner, cases when the refund rate 82 is 150% and when the refund rate 82 is 200% are shown in rows of 80b and 80c, respectively, and the rebate amounts 84 in these cases are 6000 yen and 8000 yen, respectively.

As a further method, in the point conversion method as described above, the certain refund rate is not used, but a conversion rate (refund rate) from points to the rebate amount can changed corresponding to an Internet utilization period of the user. For example, in the example described above, the conversion rate (refund rate) is set to be 25% in a case the utilization period is shorter than one year, 50% in a case the utilization period is one year or longer but shorter than two years, and 100% in a case the utilization period is two year or longer, and in this manner, a willingness to purchase in a case of a long utilization period can be increased dramatically.

By utilizing point conversion in the above manner, the manufacturer's side can have flexibility in the degree of freedom in setting the rebate amount. In addition, in a case there are a plurality of specific items of merchandise, the refund rate can be changed depending on the items of merchandise. Further, for the user as well, there is a case where an amount larger than the total paid amount paid by the user himself or herself is rebated, and this increases a willingness to purchase the specific item of merchandise even more.

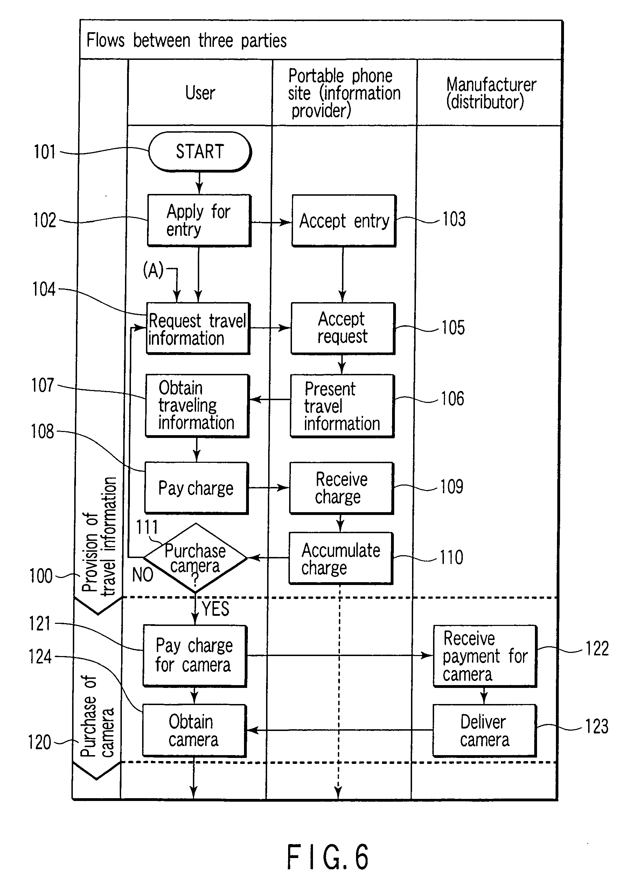

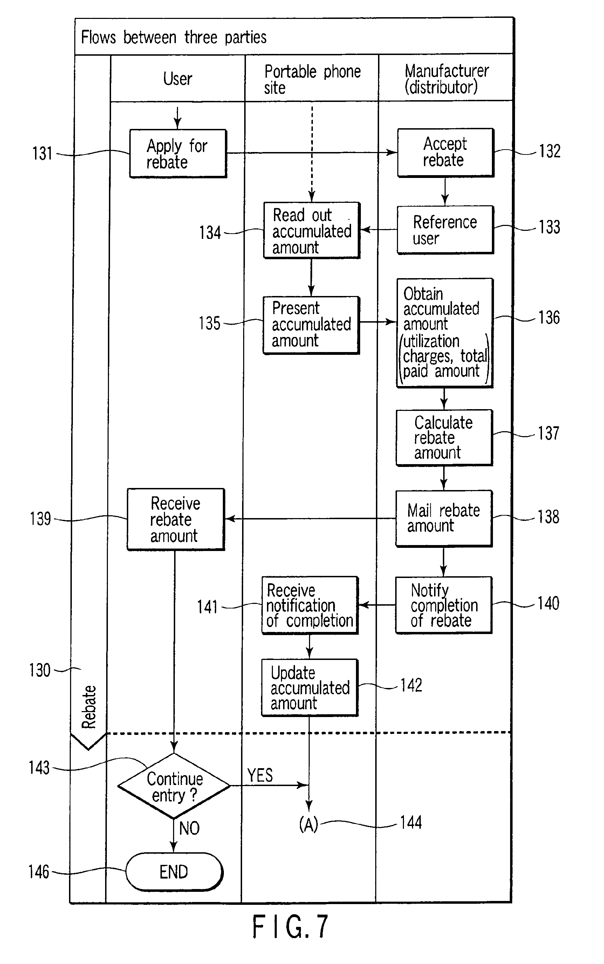

The flows between the three parties, which are the user, the information provider, and the manufacturer, which have been described so far will be described by using a time sequence with reference to FIGS. 6 and 7. First of all, description will be made from START (101) in FIG. 6 step by step. First, the user makes an application for entry (102) of the portable phone site. The portable phone site receives the entry (103), and registers the user information. Next, the user accesses the portable phone site in order to obtain travel information (104). Then, the portable phone site checks user registration information of the user, and in a case that the user is registered, the portable phone site accepts the user's request to obtain the travel information (105), and shows the travel information (106). The user views the travel information via the display screen of the portable phone (107). The user who utilizes the information provision service pays a utilization charge for the information provision to the information provider at the end of every month (108), and the information provider receives the charge (109). The information provider pools the charge of every month (110). On the other hand, based on the total paid amount, which is a total amount of the charges paid to the information provider, the user determines whether to use the total paid amount as a rebate, and determines whether to purchase a camera which is designated by the manufacturer as a specific item of merchandise (111). In a case that the user does not purchase the camera, the total paid amount is not used, and the charges paid by the user are continuously pooled to the total paid amount. On the other hand, in a case that the user purchases the camera, the flow moves to the next step. Up to this point, a provision stage (100) of the travel information utilizing the portable phone site has been described.

Next, a purchasing state (120) of a specific item of merchandise (here, a camera) will be described. The user expects to receive a rebate with respect to the charges that the user paid in the information provision state described above, and purchases the camera, which is the specific item of merchandise at a distributor. That is, the user pays the distributor a charge for the camera (121), and the distributor receives the charge for the camera (122) and delivers the camera, which is an item of merchandise, to the user (123). The user receives the camera (124). At this point, the purchasing state of the camera ends.

Further, a rebate stage (130) will be described. The user who has purchased the camera in the above stage makes an application for a rebate to the manufacturer of the camera (131) in order to receive the rebate. The manufacturer receives the application for the rebate from the user (132). The manufacturer accesses the portable phone site in order to obtain the total paid amount of the utilization charges of the portable phone site of the user up to this point (133). In compliance with the request from the manufacturer, the portable phone site reads out the total paid amount of the utilization charges of the portable phone site of the user up to this point which has been pooled in the information provision stage (134), and presents the amount to the manufacturer (135). The manufacturer obtains the total paid amount of the utilization charges of the user (136), calculates the rebate amount by the method described above based on the total paid amount (137), and then mails the calculated rebate amount to the user (138). Here, as a method of delivering the rebate amount, mailing is described. However, the method is not limited thereto, and any method, such as bank transfer and delivery by hand, may be used as long as the rebate amount can be delivered. In this manner, the user receives the rebate amount (139). From the above, the user can purchase the camera with a discount for the rebate amount. Subsequently, the manufacturer sends the total paid amount of the utilization charges of the portable phone site which becomes a target for the rebate to the portable phone site (140). Here, "becomes a target for the rebate" is specified, because in the description so far, a case in which a total amount of the total paid amount is used as a rebate has been assumed. However, a case in which a part of the total paid amount is a target for the rebate in accordance with what the user desires can be considered. Such a case as well can be performed, similarly to the above description. Subsequently, the portable phone site side receives the paid amount (141), subtracts the total paid amount of the utilization charges of the portable phone site, which is the target of the rebate, from the pooled utilization amount, and stores the utilization amount (142). This operation is carried out in order to prevent the rebate from being provided again based on the total paid amount of the utilization charges of the portable phone site which has already been rebated, i.e., to prevent a double rebate. The user who has received the rebate determines whether the user continues entry in the portable phone site in order to receive the information provision (143). In a case that the user continues the entry, the flow returns from (A)(144) to (A)(145) in FIG. 6, and a similar flow is repeated. On the other hand, if the user does not continue the entry, the user registration information is erased from the portable phone site, and application of the system ends (146).

## Claims

1. A sales promotion system of merchandise utilizing an Internet site, **characterized by** comprising:
information providing means (12) for sending predetermined information to an information terminal device (2) of a user via the Internet site; and
means for calculating a cumulative total of charges or point values converted from charges paid in a predetermined period in exchange for information provided by the information providing means (12), so that the cumulative total is used for deciding a rebate amount rebated to the user when the user purchases a specific item of merchandise.

2. A sales promotion system of merchandise utilizing an Internet site, **characterized by** comprising:
user registration means (5) for storing user registration information in a user registration information storage medium (11) after receiving new registration information of a user;
information providing means (12) for providing information to the user via the Internet site only in a case where the user registration information is stored in the user registration information storage medium (11);
payment information registration means (5) for receiving payment information of the user including a paid amount as a charge for the information provision, and storing the payment information in a payment information storage medium (13);
payment information adding means (17) for adding, in a case of receiving the payment information a plurality of times, a paid amount in the payment information received a plurality of times to the paid amount in the payment information stored in the payment information storage medium (13);
total paid amount registration means (5) for storing a paid amount in the payment information in the payment information storage medium (13) as a total paid amount when the payment information is received only once, and storing a total amount obtained by addition by the payment information adding means (17) in the total paid amount storage medium (18) as a total paid amount in a case the payment information is received only once;
total paid amount readout means (14) for reading out the total paid amount corresponding to the user from the total paid amount storage medium (18); and
rebate amount calculating means (15, 23, 24) for calculating a rebate amount to be rebated from a charge for purchase of a specific item of merchandise according to the total paid amount read out by the total paid amount readout means (14) only in a case where the user purchases the specific item of merchandise.

3. The sales promotion system according to claim 2, **characterized in that** the rebate amount is equal to the total paid amount.

4. The sales promotion system according to claim 2, **characterized in that** the rebate amount is an amount that is calculated by multiplying points which are converted from the paid amount by a certain amount.

5. The sales promotion system according to claim 2, **characterized in that** the rebate amount is an amount that is calculated in a manner that the total paid amount is converted to points, and the points are multiplied by a conversion rate from the points to the rebate amount that is changed depending on a utilization period of the Internet site of the user.

6. The sales promotion system according to claim 1, **characterized in that** the rebate amount is an amount that is calculated in a manner that points are multiplied by a conversion rate from the points to the rebate amount that is changed depending on a utilization period of the Internet site of the user.

7. The sales promotion system according to claim 2, **characterized in that** a charge for the information provision is a monthly utilization charge for the Internet site.

8. The sales promotion system according to claim 1 or 2, **characterized in that** the Internet site is a portable phone site.

9. The sales promotion system according to claim 1 or 2, **characterized in that** a certain relationship exists between a content of the information and the specific item of merchandise.

10. The sales promotion system according to claim 9, **characterized in that** the content of the information is travel information including a photo, and the specific item of merchandise is a camera.

11. A sales promotion system of merchandise utilizing an Internet site, **characterized by** comprising:
rebate application information registration means (7) for storing rebate application information of a user in a rebate application information storage medium (21);
payment information requesting means (22) for requesting the Internet site to send payment information of the user including a total paid amount which is a total amount of charges in a predetermined period for information provided to the user via the Internet (4), in a case where at least the rebate application information is stored in the rebate application information storage medium (21);
payment information receiving means (23) for receiving the payment information sent from the Internet site in accordance with the request; and
rebate amount calculating means (24) for calculating a rebate amount to be discounted from a charge for purchase of a specific item of merchandise in accordance with the total paid amount of the user included in the payment information, only in a case that the user purchases the specific item of merchandise.

12. The sales promotion system according to claim 11, **characterized in that** the rebate amount is equal to the total paid amount.

13. The sales promotion system according to claim 11, **characterized in that** the rebate amount is an amount that is calculated by multiplying points which is converted from the paid amount by a certain amount.

14. The sales promotion system according to claim 11, **characterized in that** the rebate amount is an amount that is calculated in a manner that the total paid amount is converted to points, and the points are multiplied by a conversion rate from the points to the rebate amount that is changed depending on a utilization period of the Internet site of the user.

15. The sales promotion system according to claim 11, **characterized in that** a charge for the information provided to the user is a monthly utilization charge for the Internet site.

16. The sales promotion system according to claim 11, **characterized in that** the Internet site is a portable phone site.

17. The sales promotion system according to claim 11, **characterized in that** a certain relationship exists between a content of the information provided to the user and the specific item of merchandise.

18. The sales promotion system according to claim 17, **characterized in that** the content of the information provided to the user is travel information including a photo, and the specific item of merchandise is a camera.

19. A sales promotion method of merchandise utilizing an Internet site, **characterized by** comprising:
a step (106) of causing a computer to provide predetermined information to an information terminal device (2) of a user via the Internet site; and
a step (110) of causing the computer to calculate a cumulative amount of charges or point values converted from charges paid in exchange for the provided predetermined information, so that the cumulative amount is used for deciding a rebate amount rebated to the user when the user purchases a specific item of merchandise.

20. A sales promotion method of merchandise utilizing an Internet site, **characterized by** comprising:
a step (103) of storing user registration information in a user registration information storage medium (11) after receiving new registration information of a user;
a step (106) of providing information to the user via the Internet site only in a case where the user registration information is stored in the user registration information storage medium (11);
a step (109) of receiving payment information of the user including a paid amount as a charge for the information provision, and storing the payment information in a payment information storage medium (13);
a step (110) of adding, in a case of receiving the payment information a plurality of times, a paid amount in the payment information received a plurality of times to the paid amount in the payment information stored in the payment information storage medium (13);
a step (110) of storing a paid amount in the payment information in the payment information storage medium (13) as a total paid amount when the payment information is received only once, and storing a total amount obtained by addition by the step (110) of adding a paid amount total paid amount storage medium (18) as a total paid amount in a case the payment information is received only once;
a step (134) of reading out the total paid amount corresponding to the user from the total paid amount storage medium (18); and
a step (137) of calculating a rebate amount to be rebated from a charge for purchase of a specific item of merchandise according to the total paid amount read out from the total paid amount storage medium (18) only in a case where the user purchases the specific item of merchandise.

21. The sales promotion method according to claim 20, **characterized in that** the rebate amount is equal to the total paid amount.

22. The sales promotion method according to claim 20, **characterized in that** the rebate amount is an amount that is calculated by multiplying points which are converted from the total paid amount by a certain amount.

23. The sales promotion method according to claim 20, **characterized in that** the rebate amount is an amount that is calculated in a manner that the total paid amount is converted to points, and the points are multiplied by a conversion rate from the points to the rebate amount that is changed depending on a utilization period of the Internet site of the user.

24. The sales promotion method according to claim 19, **characterized in that** the rebate amount is an amount that is calculated in a manner that points are multiplied by a conversion rate from the points to the rebate amount that is changed depending on a utilization period of the Internet site of the user.

25. The sales promotion method according to claim 20, **characterized in that** a charge for the information provision is a monthly utilization charge for the Internet site.

26. The sales promotion method according to claim 19 or 20, **characterized in that** the Internet site is a portable phone site.

27. The sales promotion method according to claim 19 or 20, **characterized in that** a certain relationship exists between a content of the information and the specific item of merchandise.

28. The sales promotion method according to claim 27, **characterized in that** the content of the information is travel information including a photo, and the specific item of merchandise is a camera.

29. A sales promotion method of merchandise utilizing an Internet site, **characterized by** comprising:
a step (132) of storing rebate application information of a user in a rebate application information storage medium (21);
a step (133) of requesting the Internet site to send payment information of the user including a total paid amount which is a total amount of charges in a predetermined period for information provided to the user via the Internet (4), in a case where at least the rebate application information is stored in the rebate application information storage medium (21);
a step (136) of receiving the payment information sent from the Internet site in accordance with the request; and
a step (137) of calculating a rebate amount to be discounted from a charge for purchase of a specific item of merchandise in accordance with the total paid amount of the user included in the payment information, only in a case that the user purchases the specific item of merchandise.

30. The sales promotion method according to claim 29, **characterized in that** the rebate amount is equal to the total paid amount.

31. The sales promotion method according to claim 29, **characterized in that** the rebate amount is an amount that is calculated by multiplying points which are converted from the total paid amount by a certain amount.

32. The sales promotion method according to claim 29, **characterized in that** the rebate amount is an amount that is calculated in a manner that the total paid amount is converted to points, and the points are multiplied by a conversion rate from the points to the rebate amount that is changed depending on a utilization period of the Internet site of the user.

33. The sales promotion method according to claim 29, **characterized in that** a charge for the information provided to the user is a monthly utilization charge for the Internet site.

34. The sales promotion method according to claim 29, **characterized in that** the Internet site is a portable phone site.

35. The sales promotion method according to claim 29, **characterized in that** a certain relationship exists between a content of the information provided to the user and the specific item of merchandise.

36. The sales promotion method according to claim 35, **characterized in that** the content of the information provided to the user is travel information including a photo, and the specific item of merchandise is a camera.
